(19) Europäisches Patentamt
European Patent Office
Office européen des brevets

(11) Veröffentlichungsnummer: **0 198 790 B1**

(12) **EUROPÄISCHE PATENTSCHRIFT**

(45) Veröffentlichungstag der Patentschrift: **29.01.92**

(51) Int. Cl.5: **B29C 49/04**, B29D 23/00, B65D 47/06

(21) Anmeldenummer: **86730041.0**

(22) Anmeldetag: **06.03.86**

(54) **Verfahren zur Herstellung eines durch Verschraubung lösbar mit dem Entleerungsstutzen eines Kraftstoffkanisters, insbesondere für Kraftwagen, verbindbaren Giessrohres aus Kunststoff im Wege des Hohlkörper-Blasverfahrens und nach dem Verfahren hergestelltes Giessrohr.**

(30) Priorität: **07.03.85 DE 3508320**

(43) Veröffentlichungstag der Anmeldung:
**22.10.86 Patentblatt 86/43**

(45) Bekanntmachung des Hinweises auf die Patenterteilung:
**29.01.92 Patentblatt 92/05**

(84) Benannte Vertragsstaaten:
**FR GB NL**

(56) Entgegenhaltungen:
**DE-A- 1 930 906**
**GB-A- 847 883**
**US-A- 3 058 633**
**US-A- 3 371 376**
**US-A- 3 819 789**

(73) Patentinhaber: **Zeigmeister, Hans-Joachim, Dipl.-Ing.**
**Hochfeilerweg 43**
**W-1000 Berlin 42(DE)**

(72) Erfinder: **Zeigmeister, Hans-Joachim, Dipl.-Ing.**
**Hochfeilerweg 43**
**W-1000 Berlin 42(DE)**

(74) Vertreter: **Pfenning, Meinig & Partner**
**Kurfürstendamm 170**
**W-1000 Berlin 15(DE)**

EP 0 198 790 B1

**Beschreibung**

Die Erfindung bezieht sich auf ein Verfahren zur Herstellung eines durch Verschraubung lösbar mit dem Anschlußstutzen eines Kraftstoffkanisters, insbesondere für Kraftwagen, verbindbaren flexiblen Kunststoff-Gießrohres nach dem Oberbegriff des Anspruches 1 und auf das nach diesem Verfahren hergestellte Gießrohr gemäß Anspruch 2.

Kraftstoffkanister dienen in aller Regel der Mitführung einer Reservemenge an Kraftstoff in einem Kraftfahrzeug, damit bei völligem Leerfahren des Kraftwagentanks der Kraftwagen noch den Weg bis zur Erreichung einer Tankstelle zurücklegen kann. Die Kraftstofftanks bestehen häufig aus Kunststoff und sind in der Regel im sogenannten Blasverfahren hergestellt. Sie besitzen einen ihrer Befüllung und auch ihrer Entleerung dienenden, mit Außengewinde versehenen Stutzen, der zum Zwecke des sicheren Verschlusses mit einem auf den Stutzen aufschraubbaren mit Innengewinde versehenen Verschlußdeckel ausgestattet ist. Das Entleeren des Kraftstoffkanisters in den Kraftwagentank erfolgt durch ein dem Kanister beigegebenes Gießrohr, das an seinem einen Ende eine drehbare und unverlierbar angeordnete Überwurfmutter besitzt, mit der das Gießrohr dichtend mit dem Gewindestutzen des Kanisters verschraubt wird, um den Kanister über das Gießrohr in den Krafttwagentank zu entleeren. Die Gießrohre bestehen ebenfalls aus Kunststoff und sind auch im Blasverfahren aus einem schlauchförmigen Rohling hergestellt, während die Überwurfmutter im Spritzgießverfahren hergestellt ist und ein mit dem Außengewinde des Gewindestutzens in Eingriff bringbares Innengewinde trägt, das der sicheren Verbindung des Gießrohres mit dem Kanister dient.

Zunächst wurden starre Gießrohre verwendet, die in ihrem vorderen Bereich eine leichte bogenförmige Krümmung besitzen, um das Entleeren des Kanisters in den Kraftwagentank zu erleichtern (DE-GM 1935951). Angesichts der Tatsache, daß die Einfüllstutzen des Kraftwagentanks bei recht unterschiedlichen Kraftwagen unterschiedliche Anordnungen und Formen besitzen, wirkt sich in vielen Fällen die Verwendung eines solchen starren Gießrohres als sehr nachteilig aus, da in Anpassung an die Führung des Einfüllstutzens des Kraftwagentanks der Kanister nicht durch einfaches Anheben entleert werden kann, sondern während seiner Entleerung gedreht werden mußte, um den Kraftstoff vollständig ausfließen zu lassen. Desweiteren sind Kunststoffgießrohre in einstückiger Ausführung bekannt, (DE-A- 1 930 906), die ebenfalls eine starre knieförmige Abbiegung aufweisen, wobei der Anschlußstutzen Innengewinde aufweist, welche in einem materialaufwendigen Spritzgießverfahren hergestellt sind. Der durch diese Verfahrensweise bedingte hohe Materialeinsatz ermöglicht andererseits die Herstellung eines einstückigen Anschlußstutzens im Wege der Kalibrierung und damit eine Prägung des Innengewindes.

Um Nachteile des starren Gießrohres auszuschließen, ist es bekannt, das in den Tankstutzen einzuführende Ende des Gießrohres mittels paralleler Querrillungen ausreichend flexibel auszubilden. Diese flexiblen Gießrohre haben sich in jüngster Zeit durchgesetzt; auch bei ihnen werden durch Spritzgießtechnik hergestellte Überwurfmuttern verwendet, die von dem hinteren Ende des Gießrohres drehbar und unverlierbar aufgenommen sind.

Diese bekannten flexibel ausgebildeten Gießrohre sind in ihrer Herstellung insoweit aufwendig, als die Verwendung von zwei nach unterschiedlichen Techniken hergestellten Teile erforderlich sind, nämlich das im Wege des Hohlkörper-Blasverfahrens aus einem schlauchförmigen Rohling gefertigte Gießrohr einerseits und die durch Spritzgießen erzeugte, mit dem erforderlichen Innengewinde ausgestattete Überwurfmutter andererseits. Diese bisher erforderliche Verwendung von zwei unterschiedlichen Ausformverfahren mit den zugehörigen Formen für das Gießrohr und die Überwurfmutter, die Zusammenfügung der beiden Teile zu einem Gebrauchsgegenstand, und der erforderliche, insbesondere durch die Überwurfmutter gegebene erhöhte Materialaufwand verteuerten das Endprodukt. Im Interesse einer optimalen Wirtschaftlichkeit, wie sie bei ausgesprochenen Massenprodukten besonders angestrebt wird, besteht daher ein Bedürfnis, die bisher erforderliche entweder materialmäßig oder verfahrensmäßig aufwendige Fertigung zu vermeiden und ein Verfahren und ein flexibles Kunststoffgießrohr zu schaffen, das in einem einzigen Arbeitsgang, im Zuge der Ausformung eines schlauchförmigen Rohlings herstellbar ist und aus einem einzigen Bauteil besteht.

Diese Aufgabe wird bei einem Verfahren nach dem Oberbegriff des Hauptanspruches gelöst durch die in seinem kennzeichnenden Teil angegebene Maßnahme. Das nach dem Verfahren hergestellte Gießrohr zeichnet sich durch die in den Unteransprüchen 2 bis 4 angegebenen, der Lösung der Aufgabe dienenden Merkmalen aus.

Der erfindungsgemäße Ausbildung der Gewindemuffe im Zuge der Ausformung des schlauchförmigen Rohlings durch den Blasdruck standen von Hause aus mehrfache Bedenken entgegen. Da die Wandstärke des fertigen Gießrohres gering ist und in der Regel in der Größenordnung von 1 mm liegt, kann aus an sich selbstverständlichen Gründen die Wandstärke der an das Gießrohr im Blaswege anzuformenden Gewindemuffe diese Wandstärke praktisch nicht überschreiten. Beim Aufschrauben der Gewindemuffe des Gießrohres auf den Stutzen des Kanisters ist wegen dieser geringen Wandstärke keinesfalls voraussehbar gewesen, daß eine ausreichend oft wiederholbare dichtende Verbindung zwischen Gießrohr und Kanister erreicht werden kann. Ein Fachmann müßte daher von Hause aus der Verwendung einer erfindungsgemäßen, im Blaswege an das Gießrohr angeformten Gewindemuffe ablehnend gegenüberstehen. Hinzu kommt, daß die Herstellung eines Innengewindes, wie es für die Gewindemuffe erforderlich ist, im Blaswege an sich nicht erreichbar ist. Im Blasverfahren ließe sich nach dem bekannten Stand der Technik allenfalls ein einwandfreies Außengewinde unter Wirkung des Blasdruckes erzielen, wenn die hierfür erforderliche Kontur in die Blasform durch Gravur eingebracht ist.

Gemäß der vorliegenden Verfahrensweise wurde erstmals erkannt, daß sich bei entsprechend ausgebildeter Form an das eine Ende des Gießrohres in ein und demselben Arbeitsgang, nämlich durch Blasen, eine Gewindemuffe anblasen läßt, bei der die Innenfläche des angeformten Außengewindes als vollwertiges Innengewinde zum Aufschrauben des Gießerohres auf den Entleerungsstutzen des Kanisters dienen kann und eine zuverlässig dichtende Verbindung zwischen Gießrohr und Entleerungsstutzen gewährleistet. Nach der hier beschriebenen Verfahrensweise erfolgt nämlich bei der hier zur Verfügung stehenden geringen Wandstärke des das Gießrohr bildenden Materials durch den herrschenden Blasdruck eine derart formtreue Ausbildung der Innenfläche des durch die beiden Formhälften erzielten Außengewindes, daß sich eine mit dem Gießrohr einen gemeinsamen Teil bildende Gewindemuffe ergibt, die im vollen Umfange der bisher erforderlichen Überwurfmutter entspricht und ebenso wie diese eine dichtende Verschraubung zwischen dem Gewindestutzen des Kanisters und dem Gießrohr bei Aufrechterhaltung der Stabilität und Lebensdauer der Gewindemuffe gewährleistet. Der nach außen gerichtete, an das Ende des Gießrohres angeformte Ringbund bildet mit seiner Innenfläche eine sich auf die Stirnfläche des Entleerungsstutzens aufliegende Dichtfläche, während der anschließende axial gerichtete Teil mit seiner Innenfläche ein Schraubengewinde für den Entleerungsstutzen bildet und der anschließende zylindrische den Entleerungsstutzen mit seinem Innendurchmesser übergreifende Wandteil als Verstärkungselement der Gewindemuffe die erforderliche Festigkeit und Formtreue verleiht.

In dem zylindrischen Wandteil der Gewindemuffe wahlweise angeordneten Vorsprünge können Griffnoppen bilden und ermöglichen die Herstellung einer dichtenden Schraubverbindung zwischen Gießrohr und Entleerungsstutzen des Kanisters. Anstelle der Griffnoppen können auch auf den an die Gewindemuffe anschließenden starren Teil des Gießrohres axial gerichtete, auf dem Umfang verteilte wulstartige Vorsprünge angeordnet sein, die in gleicher Weise der Herstellung einer sicheren Schraubverbindung dienen.

Die beiliegenden Zeichnungen zeigen eine beispielsweise Ausführungsform des nach dem Verfahren hergestellten erfindungsgemäßen Gießrohres, und es bedeutet:

Fig. 1     Darstellung des Gießrohres im teilweisen Schnitt;

Fig. 2     Seitenansicht gem. Pfeilrichtung der Fig. 1

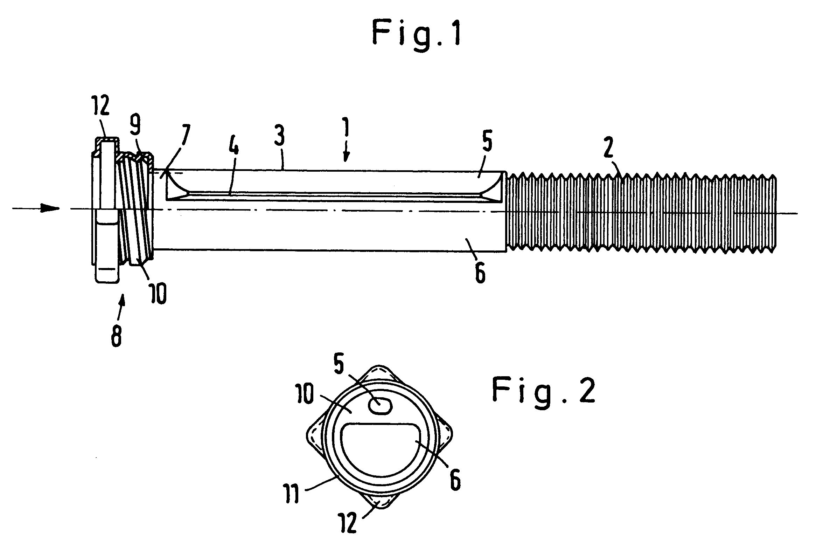

Die Figur 1 zeigt das im Blaswege hergestellte Gießrohr 1 aus Kunststoff. Das Gießrohr 1 besteht aus einem vorderen Abschnitt 2, der durch eine Vielzahl von parallelen quergerichteten Rillen eine ausreichende Flexibilität besitzt, um in den Füllstutzen eines Kraftwagentanks eingeführt werden zu können, und aus einem hinteren starren Abschnitt 3. Der Abschnitt 3 ist durch Einbringung einer Quetschnaht 4 in zwei Rohrteile 5, 6 unterteilt von denen der obere Rohrteil 5 der Belüftung des sich unter Wirkung der Schwerkraft entleerenden, nicht dargestellten Kanisters dient, während durch den anderen Rohrteil 6 der Kraftstoff aus dem Kanister in den Kraftwagentank fließt. Durch die Anordnung der beiden Rohrteile 5 und 6 im Bereich des Abschnitts 3 ist gewährleistet, daß infolge der unterschiedlichen, auf die beiden Rohrteile einwirkenden hydrostatischen Drücke die Luft ohne Störungen längs des Abschnitts 3 in den Kanister einfließen kann, wodurch erreicht wird, daß eine optimal kurze Entleerungszeit des Kanisters erfolgt. An das Ende 7 des Abschnitts 3 des Gießrohrs 1 ist eine zylindrisch ausgebildete Gewindemuffe 8 angeformt. An das Ende 7 schließt sich hierbei zunächst ein radial nach außen gerichteter Ringbund 9 an, der mit seiner Innenfläche eine Dichtfläche für die Stirnseite des nicht dargestellten Gewindestutzen des Kanisters bildet. An den Ringbund 9 schließt sich ein Gewindeteil 10 der Gewindemuffe 8 an, dessen innere Oberfläche das für die Aufschraubung auf den Gewindestutzen des Kanisters erforderliche Innengewinde bildet. An den Gewindeteil 10 schließt sich ein zylindrischer Teil 11 an, dessen Innenmaß wenigstens dem Außengewinde des Stutzens des Kanisters entspricht. Der zylindrische Teil 11 bildet eine den Gewindeteil 10 stabilisierende Verstärkung und ist mit auf dem Umfang verteilten Ausbuchtungen versehen, die Griffnoppen 12 vorgeben zur Aufschraubung der Gewindemuffe 8 auf den Entleerungsstutzen des Kanisters.

**Patentansprüche**

1.  Verfahren zur Herstellung eines durch Verschraubung lösbar mit dem Anschlußstutzen eines Kraftstoffkanisters, insbesondere für Kraftwagen, verbindbaren flexiblen Kunststoff-Gießrohres, bestehend aus dem Anschlußstutzen für den Kanister, einem starren Rohrteil mit Belüftungskanal und dem in den Füllstutzen des Kraftwagentanks einführbaren flexiblen Gießabschnitt, wobei das Rohr im Wege des Hohlkörper-Blasverfahrens aus einem schlauchförmigen Rohling hergestellt wird, **dadurch gekennzeichnet,** daß im Zuge der Ausformung des in einer entsprechenden Form aufgenommenen Rohlings durch den Blasdruck in den Anschlußstutzen ein Innengewinde und ein, an das Rohrende anschließender, radial nach außen gerichteter, eine innere Dichtungsfläche für die Stirnseite des Anschlußstutzens bildender Ringbund ausgeformt wird, wobei die jeweilige Wandstärke der Wandstärke des Rohres entspricht.

2. Gießrohr aus Kunststoff, das durch Verschraubung lösbar mit dem Anschlußstutzen eines Kraftstoffkanisters, insbesondere für Kraftwagen verbindbar ist, bestehend aus dem Anschlußstutzen für den Kanister, einem starren Rohrteil mit Belüftungskanal und dem in den Füllstutzen des Kraftwagentanks einführbaren flexiblen Gießabschnitt, sowie einem an das Rohrende anschließenden, radial nach außen gerichteten, eine innere Dichtfläche für die Stirnseite des Entleerungsstutzens bildenden Ringbund, **dadurch gekennzeichnet,** daß das Gießrohr (1) an seinem, dem Kanister zugeordneten Ende (7) eine auf den Anschlußstutzen des Kanisters aufschraubbare Gewindemuffe (8) besitzt, die in ihrer Stärke der Wandstärke des Gießrohres entspricht, wobei die Innenfläche der Gewindemuffe (8) ein Schraubengewinde eines Gewindeteiles (10) für den Anschlußstutzen bildet.

3. Gießrohr nach Anspruch 2, **dadurch gekennzeichnet,** daß ein zylindrischer Teil (11) der Gewindemuffe (8) des Gießrohres (1) auf dem Umfang verteilte, vorspringende Griffnoppen (12) bildende Ausbuchtungen aufweist.

4. Gießrohr nach Anspruch 3, **dadurch gekennzeichnet,** daß die auf dem Umfang des an die Gewindemuffe (8) anschließeneden starren Rohrabschnitts (3) auf dem Umfang verteilten axial gerichteten Griffnoppen wulstartigen Vorsprünge in Form von Quetschnähten bilden.

## Claims

1. Method for producing a flexible synthetic-material pouring tube which is detachably connected by way of screwing to the connecting socket of a fuel cannister, in particular for motor vehicles, comprising the connecting socket for the cannister, a rigid tube section with ventilating channel and the flexible pouring section for insertion into the filler opening of the motor-vehicle tank, in which respect the tube is made from a tubular blank by means of the hollow-body blowing method, **characterised in that** in the course of shaping the blank, which has been accommodated in a corresponding form, an internal thread is formed by the blow pressure in the connecting socket, and in that a annular collar is formed which is adjacent to the end of the pipe and radially outward oriented and which is an inner sealing surface for the front end of the connecting socket, whereby the respective wall thickness corresponds to the wall thickness of the tube.

2. Pouring tube of synthetic material which is detachably connected by way of screwing to the connecting socket of a fuel cannister, in particular for motor vehicles, comprising the connecting socket for the cannister, a rigid tube section with ventilation channel and the flexible pouring section for insertion into the filler opening of the motor-vehicle tank, and an annular collar, which forms an inner seal for the front end of the pouring socket and which is adjacent to the end of the tube and radially outward oriented, **characterised in that** the pouring tube (1) has at its end (7) which is associated with the cannister a threaded socket (8) which is screwed onto the connecting socket of the cannister and which in its thickness corresponds to the wall thickness of the pouring tube, in which respect the inside surface of the threaded socket (8) forms a screw thread of a threaded part (10) for the connecting socket.

3. Pouring tube according to claim 2, **characterised in that** a cylindrical part (11) of the threaded socket (8) of the pouring tube (1) comprises peripherally spaced protrusions which are holding means (12).

4. Pouring tube according to claim 3, **characterised in that** the holding means, which are spaced and axially oriented on the periphery of the tube section (3) adjacent to the threaded socket (8), have lip-like protrusions in the form of crimping seams.

## Revendications

1. Procédé pour la fabrication d'un tuyau de coulée en matière plastique, démontable par dévissage et relié au raccord de vidange d'un bidon de carburant, en particulier pour véhicule automobile, ledit tuyau de coulée étant constitué du raccord de vidange pour bidon de carburant, d'un élément tubulaire rigide muni d'un canal d'aération et d'un bec verseur flexible pouvant être inséré dans le tube de remplissage du réservoir du véhicule automobile, ledit tuyau étant fabriqué par le procédé de soufflage de corps creux à partir d'une paraison en forme de tube souple, caractérisé par le fait que, au cours du moulage de la pièce brute placée dans un moule approprié, la pression de soufflage a pour effet de mouler un filetage intérieur dans le raccord de vidange et une collerette de forme annulaire se raccordant à l'extrémité du tuyau, orientée radialement vers l'extérieur et formant une face d'étanchéité intérieure pour la face frontale du raccord de vidange, l'épaisseur respective des parois correspondant à l'épaisseur de la paroi du tuyau.

2. Tuyau de coulée en matière plastique, démontable par dévissage et relié au raccord de vidange d'un bidon de carburant, en particulier pour véhicule automobile, constitué du raccord de coulée du bidon de carburant, d'un élément tubulaire rigide muni d'un canal d'aération, d'un bec verseur flexible pouvant être inséré dans le tube de remplissage du réservoir du véhicule, ainsi que d'une collerette annulaire se raccordant à l'extrémité du tuyau, orientée radialement vers l'extérieur et formant une face d'étanchéité intérieure pour la face frontale du raccord de coulée du bidon de carburant, caractérisé par le fait que le tuyau de coulée (1) est muni sur son extrémité (7) associée au bidon de carburant d'un manchon fileté (8) pouvant être vissé sur le raccord de coulée dudit bidon de carburant, l'épaisseur de la paroi dudit manchon (8) correspondant à celle du tuyau de coulée, tandis que la face interne du manchon fileté (8) forme un filetage d'un élément fileté (10) pour le vissage du raccord de coulée.

3. Tuyau de coulée selon la revendication 2, caractérisé par le fait qu'une partie cylindrique (11) du manchon fileté (8) du tuyau de coulée (11) est munie de salles réparties sur le pourtour et formant des bossages (12) facilitant la préhension manuelle.

4. Tuyau de coulée selon la revendication 3, caractérisé par le fait que les bossages facilitant la préhension qui sont répartis sur le pourtour de la section tubulaire rigide (3) faisant suite au manchon fileté (8) sont orientés axialement pour constituer des saillies du type bourrelets ayant la forme de soudures réalisées par écrasement.

Fig.1

Fig.2